# EUROPÄISCHE PATENTSCHRIFT

(11) **EP 0 648 957 B1**
(45) Veröffentlichungstag und Bekanntmachung des Hinweises auf die Patenterteilung: **30.07.1997**
(21) Anmeldenummer: 94115355.3
(22) Anmeldetag: 29.09.1994
(51) Int. Cl.: F16F 15/131

(54) **Geteilte Schwungradvorrichtung mit Axiallagerung im Umfangsbereich**
Divided fly wheel device with a circumferentially arranged axial thrustbearing
Dispositif de volant divisé avec un palier de butée arrangé circonférentiellement

(30) Priorität: 15.10.1993 DE 4335207; 14.09.1994 DE 4432625
(43) Veröffentlichungstag der Anmeldung: 19.04.1995
(73) Patentinhaber: FICHTEL & SACHS AG, D-97424 Schweinfurt (DE)
(72) Erfinder: Schierling, Bernhard, Dipl.-Ing. (FH), D-97272 Kürnach (DE); Till, Ralf, Dipl.-Ing. (FH), D-97502 Euerbach (DE); Sudau, Jörg, Dipl.-Ing., D-97464 Niederwerrn (DE)

(56) Entgegenhaltungen:
- DE-A- 3 425 161
- DE-U- 8 815 924
- FR-A- 2 633 683
- US-A- 2 880 626
- US-A- 3 097 537

## Beschreibung

Die Erfindung bezieht sich auf eine geteilte Schwungradvorrichtung gemäß dem Oberbegriff des Anspruchs 1.

Durch die DE-U 88 15 924 ist, insbesondere durch Fig. 5 sowie den derselben zugeordneten Beschreibungsteil, eine geteilte Schwungradvorrichtung gemäß Oberbegriff des Anspruchs 1 bekannt, die eine vorzugsweise an der Kurbelwelle einer Brennkraftmaschine angreifende erste Schwungmasse und eine über einen Torsionsschwingungsdämpfer mit dieser verbundene zweite Schwungmasse aufweist, die gegenüber der ersten Schwungmasse zu einer begrenzten Relativdrehung befähigt ist. Eine der Schwungmassen ist für die Aufnahme einer an der anderen Schwungmasse befestigten Nabenscheibe des Torsionsschwingungsdämpfers mit einem Axial- sowie mit einem Radiallager ausgebildet, von denen das letztgenannte an seinem zur radialen Führung der Nabenscheibe dienenden Lagerteil beidseits der Nabenscheibe jeweils einen radial verlaufenden Schenkel in Form eines Deckblechs als axiale Wegbegrenzung aufweist.

Beim vorgenannten Lagerteil wird Verschleiß, der aufgrund der Relativbewegung zwischen den Deckblechen und der Nabenscheibe zu erwarten ist, bei zunehmender Betriebsdauer der Schwungradvorrichtung für ein axiales Spiel der Nabenscheibe sorgen, was insbesondere deshalb unerwünscht ist, weil dadurch dem Radiallager zugeordnete Wälzkörper nicht mehr ausschließlich in Umfangsrichtung in hierfür vorgesehenen Vertiefungen von Radiallager und Nabenscheibe bewegt werden, sondern auch senkrecht zu diesen Vertiefungen, so daß auch an dieser Stelle ein Verschleiß sowohl an den Wälzkörpern als auch an den mit den Vertiefungen ausgebildeten Bauteilen zu erwarten ist. Ab einem bestimmten Verschleißzustand der Lagerteile des Axiallagers ist demnach die Schwungradvorrichtung eingeschränkt in ihrer Funktion, wobei diese Einschränkung nur unter erheblichem technischen Aufwand behebbar sein dürfte. Zudem ist ergänzend festzustellen, daß ein für die Deckbleche der Schwungmasse geeigneter Werkstoff nicht unbedingt optimal für die Ausbildung der Lagerteile des Axiallagers ist.

Der Erfindung liegt die Aufgabe zugrunde, ein Axiallager so auszubilden, daß dieses bei konstruktiv einfachem Aufbau und geringem Platzbedarf optimale Lagereigenschaften und Verschleißarmut erbringt.

Diese Aufgabe wird erfindungsgemäß durch den kennzeichnenden Teil des Anspruchs 1 gelöst. Durch Ausbildung von Schenkeln des Axiallagers durch jeweils eine Scheibe ist die axiale Abstützung der Nabenscheibe der Schwungradvorrichtung mit konstruktiv besonders einfachen und in Axialrichtung extrem wenig Bauraum benötigenden Elementen realisierbar. Ein Verschleiß an diesen Scheiben wird dadurch gering gehalten, daß diese in unmittelbarer Nachbarschaft des Radiallagers angeordnet sind, so daß mit einer gleichmäßigen Schmierung für beide Lager zu rechnen ist, sofern diese innerhalb einer Fettkammer der Schwungradvorrichtung angeordnet sind. Sollte trotz einer vorteilhaften Werkstoffauswahl für die Scheiben sowie der zuvor genannten optimalen Schmierbarkeit ein Verschleiß auftreten, der eine Axialbewegung der Nabenscheibe zuläßt, kann durch Einsetzen neuer Scheiben und damit eines neuen Axiallagers mit geringstmöglichem Aufwand eine Überholung der Schwungradvorrichtung vorgenommen werden.

Obwohl nicht unbedingt erforderlich, ist es vorteilhaft, sowohl das Radiallager als auch das Axiallager im Umfangsbereich der Nabenscheibe und damit in größtmöglichem Abstand von der Drehachse der Schwungmasse vorzusehen, so daß von einem Antrieb, wie von der Kurbelwelle einer Brennkraftmaschine, eingeleitete Taumelbewegungen mit möglichst geringen Reaktionskräften übertragbar sind und, fliehkraftbedingt, bei Anordnen der Lager in einer Fettkammer, eine optimale Schmierung besteht.

Dem Anspruch 2 ist eine Ausführung des Axiallagers entnehmbar, bei der die für die Axiallagerung der Nabenscheibe bestimmten Elemente zudem für deren Radiallagerung vorgesehen sind und demnach sowohl in axialer als auch in radialer Richtung eingeleiteten Kräfte aufnehmen können.

In den Ansprüchen 3 bis 8 sind vorteilhafte Ausführungen der erfindungsgemäßen Lösung angegeben, bei denen über die Bemessung der Aussparungen oder der Abstände zwischen jeweils zwei Segmenten die Aufnahmefähigkeit des Axiallagers und/oder des Radiallagers an Fett und damit das Laufverhalten der Nabenscheibe positiv beeinflußbar ist.

Der Erfindungsgegenstand ist anhand von in der Zeichnung dargestellten Ausführungsbeispielen näher erläutert. Er zeigt:
- Fig. 1: eine geteilte Schwungradvorrichtung im Teillängsschnitt mit einem Axial- und einem Radiallager an der ersten Schwungmasse;
- Fig. 2: die Schwungradvorrichtung in Vorderansicht, teilweise in Schnittdarstellung.
- Fig. 3: wie Fig. 1, aber mit einem Axial- und einem Radiallager an der zweiten Schwungmasse;
- Fig. 4a: eine Ausführung, bei welcher das Axiallager radial außen an der zugeordneten Schwungmasse geführt ist;
- Fig. 4b: wie Fig. 4a, aber mit zwei symmetrischen Halbschalen, die jeweils als Axial- sowie als Radiallager dienen;
- Fig. 4c: wie Fig. 4b, aber einteilig;
- Fig. 4d: wie Fig. 4c, aber mit in Achsrichtung verlaufenden Ausnehmungen im Radiallager;
- Fig. 4e: Wie Fig. 4c, aber mit Radialrichtung verlaufenden Ausnehmungen im Axiallager;
- Fig. 4f: einen Teil der Schwungmasse gemäß dem Schnitt I-I der Fig. 4e mit Segmenten an einem Innenradius sowie an einer Seitenwand;
- Fig. 4g: einen Teil einer Nabenscheibe gemäß dem Schnitt II-II der Fig. 4e mit Segmenten im Umfangsbereich sowie an einer Seitenwand.

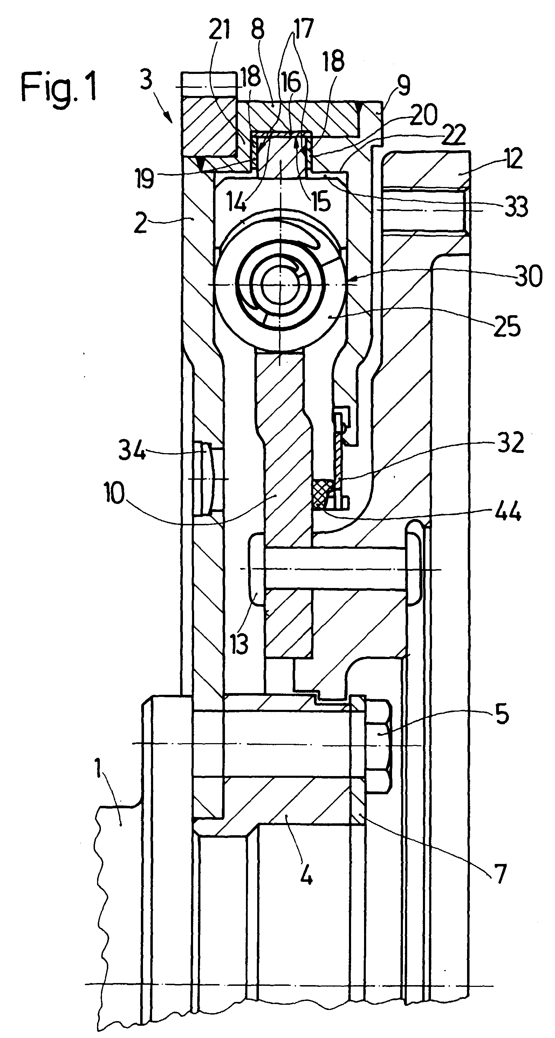

Fig. 1 zeigt den Teillängsschnitt durch eine geteilte Schwungradvorrichtung, wobei an der Kurbelwelle 1 eine Primärplatte 2 einer ersten Schwungmasse 3 und ein Lagerflansch 4 angeschraubt sind. Zwischen dem letztgenannten und den Köpfen mehrerer am Umfang des Lagerflansches 4 verteilter Schrauben 5 ist eine Platte 7, die zur Verteilung der von den Schraubenköpfen eingeleiteten Kraft auf die Kontaktfläche des Lagerflansches 4 dient, angeordnet.

Die Primärplatte 2 der Schwungmasse 3 trägt in ihrem Umfangsbereich einen ringförmigen Primärträger 8 S-förmigen Querschnitts, an dessen von der Primärplatte 2 abgewandten Ende eine Deckplatte 9 befestigt ist. In einem von der Primärplatte 2, dem Primärträger 8 und der Deckplatte 9 umschlossenen Raum 33 der ersten Schwungmasse 3 ist eine Nabenscheibe 10 aufgenommen, die an einer auf dem Lagerflansch 4 drehbar angeordneten zweiten Schwungmasse 12 mittels auf dem Umfang verteilter Nieten 13 befestigt ist. Die radiale Bemessung der Nabenscheibe 10 ist so gewählt, daß diese in ihrem Umfangsbereich in eine an der Innenseite des Primärträgers 8 ausgebildete Vertiefung 14 eingreift. Diese nimmt ein Radiallager 15 in Form eines der Kontur des Primärträgers 8 folgenden Ringes 16 und ein Axiallager 17 auf, das zu beiden Seiten der Nabenscheibe 10 mit jeweils einer Wegbegrenzung 18 für die Nabenscheibe 10 in Form jeweils einer Scheibe 19,20 ausgebildet ist. Die Scheibe 19 kommt seitlich an einem Steg 21 des Primärträgers 8 und die Scheibe 20 an einem Vorsprung 22 der Deckplatte 9 zur Anlage.

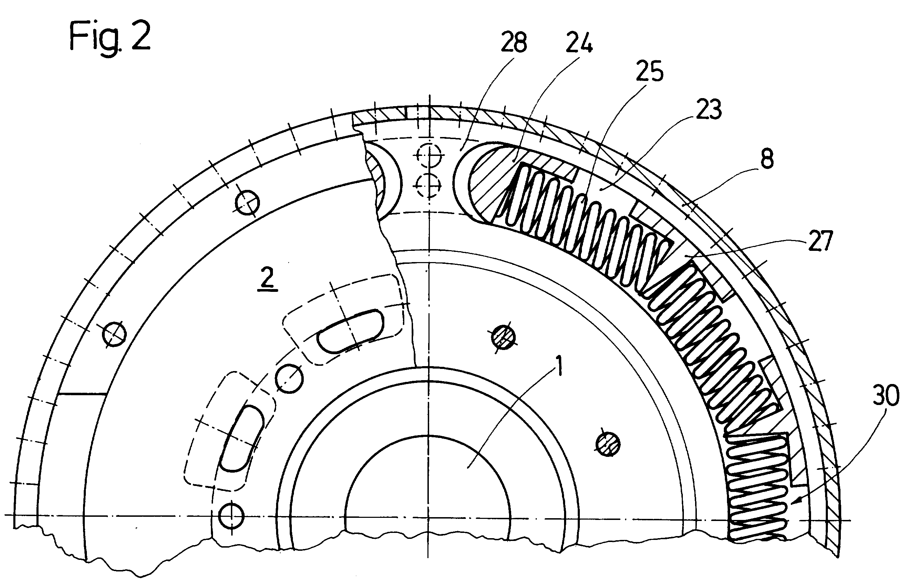

In der Nabenscheibe 10 sind halbkreisförmige Ausnehmungen 23 (Fig.2) ausgebildet, in denen Federteller 24 für Federn 25 sowie Gleitschuhe 27 für die letztgenannten angeordnet sind. Die Federteller 24 sind an Anschlägen 28 der ersten Schwungmasse 3 in Anlage bringbar. Drehmomentänderungen an der Kurbelwelle 1 und somit an der ersten Schwungmasse 3 bewirken eine Verformung der Federn 25 unter Verschiebung der Gleitschuhe 27 innerhalb der jeweiligen Ausnehmung 23. Die Federn 25 sind ebenso wie diese umgebendes, bei Verformung der Federn 25 verdrängbares Fett Teil eines Torsionsschwingungsdämpfers 30.

An dem den Drehachsen der Schwungmassen 3,12 zugewandten Ende der Deckplatte 9 (Fig.1) stützt sich eine mit der letzteren drehfeste, vorgespannte Scheibenfeder 32 ab, die mit ihrer entgegengesetzten Seite drehfest mit einer ringförmigen Dichtung 44 verbunden ist und diese gegen die Nabenscheibe 10 preßt.

Hierdurch wird einerseits infolge des Reibschlusses die Drehbewegung der Nabenscheibe 10 bei Einleitung von Drehmomentschwankungen reduziert und damit eine restlose Ausnutzung des Federwegs der Federn 25 nach Möglichkeit verhindert und andererseits der die Nabenscheibe 10 umgebende Raum 33, der mit Fett gefüllt ist, gegen einen Austritt desselben abgedichtet. Zum Befüllen dieses Raumes ist in der Primärplatte 2 eine durch einen nicht gezeigten Stöpsel verschließbare Öffnung 34 vorgesehen.

Die Platte 7 am Lagerflansch 4 bildet durch gegenüber dem letztgenannten überstehende Enden eine axiale Notzentrierung für die zweite Schwungmasse 12 für den Fall, daß sich diese, beispielsweise bei Gewaltbruch der Nieten 13, in axialer Richtung vom Lagerflansch 4 lösen will. Die zweite Schwungmasse 12 trägt in nicht dargestellter Weise sowohl das Kupplungsgehäuse als auch die dazugehörige Reibungskupplung mit einer Kupplungsscheibe. Gleiches gilt bezüglich der Notzentrierung in radialer Richtung zwischen dem Flansch 4 und der Schwungmasse 12.

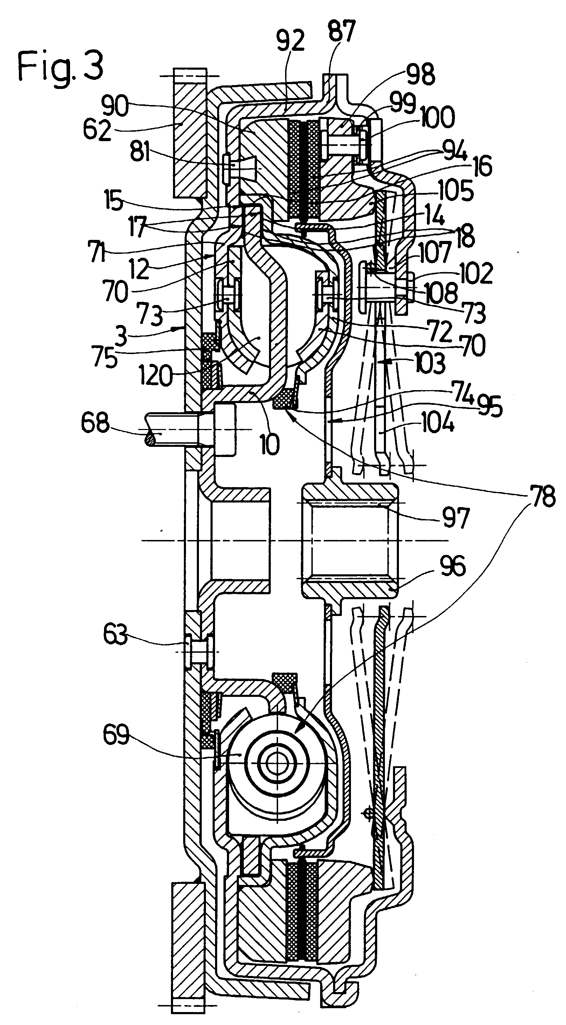

In Fig. 3 ist eine Schwungradvorrichtung gezeigt, bei der das Radiallager 15 und das Axiallager 17 an der zweiten Schwungmasse 12 vorgesehen sind. Die Ausbildung der Lager 15,17 entspricht derjenigen der bislang beschriebenen Ausführung, weshalb in Fig. 3 der Ring 16 sowie die Wegbegrenzungen 18 lediglich durch kräftig gezeichnete Linien dargestellt sind.

Die Schwungradvorrichtung gemäß Fig. 3 besteht aus einer ersten Schwungmasse 3, die im radial äußeren Bereich einen Anlasserzahnkranz 62 trägt und im radial inneren Bereich über Nieten 63 mit einer Nabenscheibe 10 verbunden ist. Die Schwungmasse 3 und die Nabenscheibe 10 sind durch Schrauben 68 an einem nicht gezeigten Antrieb, wie beispielsweise der Kurbelwelle einer Brennkraftmaschine, befestigbar.

Die Nabenscheibe 10 ist im radial mittleren Bereich mit Federn 69 in Eingriff, die außerdem durch Steuerkanten 70, die an Deckplatten 71 und 72 durch Niete 73 befestigt sind, beaufschlagbar sind. Die Deckplatten 71 und 72 sind radial außerhalb der Nabenscheibe 10 durch Verschweißen fest miteinander verbunden und bilden an der Verbindungsstelle eine Vertiefung 14, in welcher der Ring 16 des Radiallagers 15 und die Wegbegrenzungen 18 des Axiallagers 17 aufgenommen sind. In dieser Vertiefung ist die Nabenscheibe 10 mit ihrem radial äußeren Rand gegen Bewegungen in Achs- sowie in Radialrichtung gesichert geführt.

Radial innerhalb der Federn 69 ist die Deckplatte 72 mit einer Grundreibeinrichtung 74 und die Deckplatte 71 mit einer Spielreibeinrichtung 75 in Eingriff. Die Federelemente 69 sind ebenso wie die Grundreibeinrichtung 74 und die Spielreibeinrichtung 75 Teil eines Torsionsschwingungsdämpfers 78, der durch die Deckplatten 71 und 72 umschlossen ist und vorzugsweise einen Raum 120 aufweist, der mit Fett zur Dämpfung von Auslenkbewegungen der Federelemente 69 befüllt ist. Der Raum 120 weist an seinem radial äußeren Ende eine Verbindung mit dem Radiallager 15 sowie mit dem Axiallager 17 auf, so daß im Raum 120 enthaltenes Fett bei Betrieb der Schwungradvorrichtung nach radial außen und damit zu den beiden Lagerungen 15,17 gelangen kann. Hierdurch erfolgt eine Schmierung der letztgenannten.

Die gegenüber der Nabenscheibe 10 relativ bewegbaren Deckplatten 71 und 72 sind als die zweite Schwungmasse 12 der Schwungradvorrichtung wirksam. Die Deckplatte 71 ragt in radialer Richtung über die Verschweißungsstelle mit der Deckplatte 72 nach radial außen und ist über einen Niet 81 mit einer Gegendruckplatte 90 verbunden. Das besagte radial äußere Ende der Deckplatte 71 ist weiterhin als Kupplungsgehäuse 87 wirksam, das eine die Gegendruckplatte 80 umgebende ringförmige Wand 92 aufweist. Mit der Gegendruckplatte 90 ist ein Reibbelag 94 einer Kupplungscheibe 95 in Anlage bringbar, die drehfest auf einer Nabe 96 angeordnet ist, welche an ihrem Innendurchmesser mit einer Verzahnung 97 ausgebildet ist. Über diese ist die Kupplungscheibe 95 drehfest mit einer nicht gezeigten Getriebewelle verbindbar. Die Kupplungscheibe 95 ist an ihrer von der Gegendruckplatte 90 abgewandten Seite über einen weiteren Reibbelag 94 mit einer Anpreßplatte 98 in Anlage bringbar. Diese ist über elastische Mittel 99, wie beispielsweise Querblattfedern, drehfest, aber axial verschiebbar, mit dem Kupplungsgehäuse 87 verbunden. Die Verbindung der elastischen Mittel 99 mit der Anpreßplatte 98 einerends sowie mit dem Kupplungsgehäuse 87 anderenends kann jeweils durch einen Niet 100 erfolgen.

Am Kupplungsgehäuse 87 sind radial weiter innen Lagerzapfen 102 für ein Anpreßmittel 103, wie beispielsweise eine Membranfeder 104 vorgesehen, die im radial äußeren Bereich an einer Nase 105 der Anpreßplatte 98 und radial innen an einem nicht gezeigten Ausrücker zur Anlage bringbar ist. Das Anpreßmittel 103 ist einerseits durch am Kupplungsgehäue 97 angeformte Spitzen 107 und anderenseits durch einen Lagerring 108 in seiner Position gehalten.

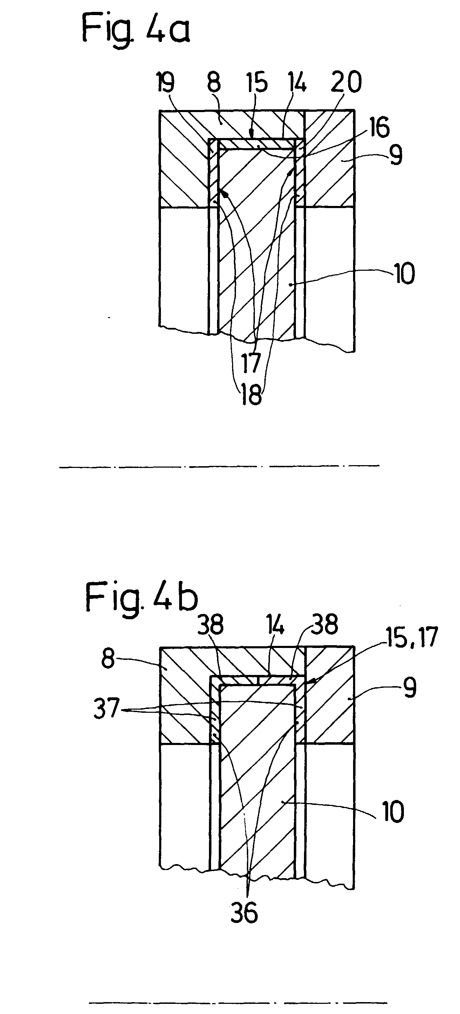

Für die Ausbildung der erfindungsgemäßen Lagerung in der Nut 14 sind weitere, in den Fig. 4a bis 4g gezeigte Ausführungen möglich, um die Nabenscheibe 10 gegen axiale Kräfte, die beim Ein- oder Ausrücken der Kupplung sowie während des Betriebs anliegen, abzustützen. Diese sind anhand der Schwungradvorrichtung gemäß Fig. 1 und 2 beschrieben, sind aber ebenso für diejenige nach Fig. 3 geeignet.

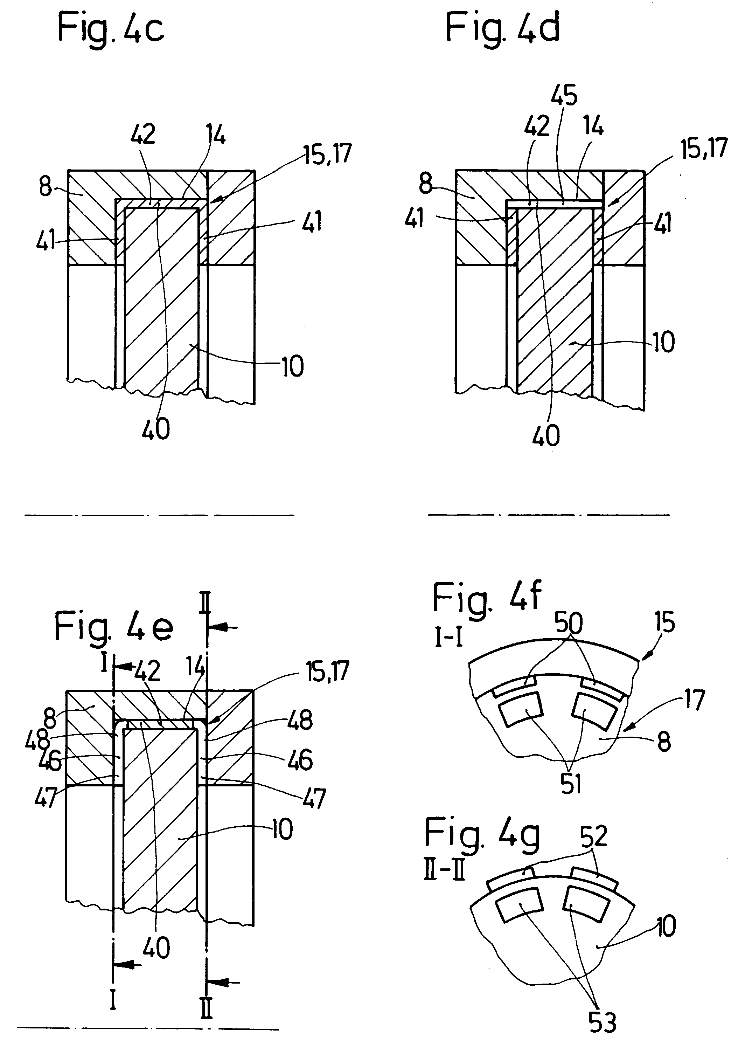

In Fig. 4a ist eine Ausführung gezeigt, bei der die als Wegbegrenzungen 18 für die Nabenscheibe 10 wirksamen Scheiben 19,20 bis an den Innenrand des Primärträgers 8 ragen und zu beiden Seiten des Ringes 16 des Radiallagers 15 anliegen. Die Ausführung gemäß Fig. 4b weist zwei ringförmige Halbschalen 36 L-förmigen Querschnitts auf, bei denen je ein zu der Nabenscheibe 10 paralleler Schenkel 37 die axiale Anlagefläche für die zugeordnete Seite der Nabenscheibe 10 bildet, während der jeweilige hierzu senkrechte Schenkel 38 zur radialen Führung der Nabenscheibe 10 dient. Fig. 4c zeigt eine Lagerschale 40 U-förmigen Querschnitts, bei der beidseits der Nabenscheibe 10 angeordnete Schenkel 41 die axiale Führung der Nabenscheibe 10 und ein mittiger Lagerteil 42 die radiale Führung übernehmen.

Dieser mittige Lagerteil kann gemäß Fig. 4d zur besseren Anpaßbarkeit an die Innenseite des Primärträgers 8 durch parallel zu den Drehachsen der Schwungmassen 3,12 verlaufende Ausnehmungen 45 unterbrochen sein. In Fig. 4e ist eine Ausführung der Lagerung dargestellt, bei der im Gegensatz zur Ausführung gemäß Fig. 4c die zu den entsprechenden Seiten der Nabenscheibe 10 parallelen Schenkel 46 in radialer Richtung verlaufende Ausnehmungen 47 aufweisen, wodurch Laschen 48 gebildet werden, die als Anlagefläche für die jeweils zugeordnete Seite der Nabenscheibe 10 dienen. Diese Ausführung paßt sich der Innenseite der jeweiligen Schwungmasse 3 oder 12 ebenfalls besonders gut an. Ebenso können gemäß Fig. 4f oder 4g Segmente 50 bis 53 zwischen der jeweiligen Schwungmasse 3 oder 12 und der Nabenscheibe 10 vorgesehen sein, wobei die Segmente wahlweise an der Schwungmasse 3,12 (Segmente 50,51) oder an der Nabenscheibe 10 (Segmente 52,53) befestigt sein können.

## Patentansprüche

1. Geteilte Schwungradvorrichtung die eine vorzugsweise an der Kurbelwelle (1) einer Brennkraftmaschine angreifende erste Schwungmasse (3) und eine über einen Torsionsschwingungsdämpfer (30) mit dieser verbundene zweite Schwungmasse (12) aufweist, die gegenüber der ersten Schwungmasse (3) zu einer begrenzten Relativdrehung befähigt ist, wobei eine der Schwungmassen (3) für die Aufnahme einer Nabenscheibe (10) des Torsionsschwingungsdämpfers (30) mit einem Axial- sowie mit einem Radiallager (17, 15) ausgebildet ist, von denen das letztgenannte an seinem zur radialen Führung der Nabenscheibe (10) dienenden Lagerteil (16) beidseits der Nabenscheibe (10) jeweils einen radial verlaufenden Schenkel (37, 41, 46) als Axiallager (17) aufweist,
dadurch gekennzeichnet,
daß die Schenkel (37,41,46) durch jeweils eine Scheibe (19,20) gebildet werden, die an einem im wesentlichen axial verlaufenden Abschnitt der sie radial abstützenden Vertiefung (14) in der Schwungmasse (3) zentrierbar sind.

2. Geteilte Schwungradvorrichtung nach Anspruch 1,
dadurch gekennzeichnet,
daß jede Scheibe (19,20) des Axiallagers (17) mit einem im wesentlichen senkrecht hierzu verlaufenden Schenkel (38) des Lagerteils (38,42) des Radiallagers (15) unter Bildung jeweils einer Halbschale (36) verbunden ist.

3. Geteilte Schwungradvorrichtung nach Anspruch 1,
dadurch gekennzeichnet,
daß der Lagerteil (42) des Radiallagers (15) durch in axialer Richtung verlaufende Ausnehmungen (45) unterbrochen ist.

4. Geteilte Schwungradvorrichtung nach Anspruch 1,
dadurch gekennzeichnet,
daß die Scheiben (19,20) jeweils durch radial zur Nabenachse gerichtete Ausnehmungen (47) unterbrochen sind.

5. Geteilte Schwungradvorrichtung nach Anspruch 1,
dadurch gekennzeichnet,
daß die Scheiben (19,20) des Axiallagers (17) an zumindest einer Seite der Nabenscheibe (10) mit Segmenten (51) zur Bildung der Anlagefläche für die Nabenscheibe (10) versehen sind.

6. Geteilte Schwungradvorrichtung nach Anspruch 1,
dadurch gekennzeichnet,
daß die Nabenscheibe (10) im Erstreckungsbereich der Scheiben (19,20) des Axiallagers (17) Segmente (53) zur Bildung einer Anlagefläche aufweist.

7. Geteilte Schwungradvorrichtung nach Anspruch 1,
dadurch gekennzeichnet,
daß die Seiten der Nabenscheibe (10) im Bereich des jeweils radial äußeren Randes mit Segmenten (52) versehen sind.

8. Geteilte Schwungradvorrichtung nach Anspruch 1,
dadurch gekennzeichnet,
daß das Radiallager (15) an seiner radialen Innenseite Segmente (50) zur Bildung der Anlagefläche für die Nabenscheibe (10) aufweist.

## Claims

1. Split flywheel assembly which comprises a first flywheel (3) which preferably engages the crankshaft (1) of an internal combustion engine and a second flywheel (12) connected to the first through a torsional vibration damper (30) and being allowed limited relative rotation with respect to the first flywheel (3), one of the flywheels (3) being designed to receive a hub disc (10) of the torsional vibration damper (30) with an axial as well as a radial bearing (17, 15) of which the latter has on that bearing portion (16) which serves for radially guiding the hub disc (10) a respective radially extending limb (37, 41, 46) as an axial bearing (17) on each side of the hub disc (10),
characterised in that,
the limbs (37, 41, 46) are formed by respective discs (19, 20) which are located on a substantially axially extending portion of the radial recess (14) in the flywheel (3) which supports them.

2. Split flywheel assembly according to claim 1,
characterised in that
each disc (19, 20) of the axial bearing (17) is connected to a limb (38) of the bearing portion (38, 42) of the radial bearing (15) which extends substantially perpendicular to it to form a respective half-shell (36).

3. Split flywheel assembly according to claim 1,
characterised in that
the bearing portion (42) of the radial bearing (15) is interrupted by axially extending recesses (45).

4. Split flywheel assembly according to claim 1,
characterised in that
the discs (19, 20) are each interrupted by recesses (47) extending radially with respect to the axis of the hub.

5. Split flywheel assembly according to claim 1,
characterised in that
the discs (19, 20) of the axial bearing (17) are provided on at least one side of the hub disc (10) with segments (51) to form the engaging faces for the hub disc (10).

6. Split flywheel assembly according to claim 1,
characterised in that
the hub discs (10) has segments (53) within the region of extent of the discs (19, 20) of the axial bearing (17) to form an engaging face.

7. Split flywheel assembly according to claim 1,
characterised in that
the sides of the hub disc (10) are provided with segments (52) in the region of the respective radially outer edge.

8. Split flywheel assembly according according to claim 1,
characterised in that
the radial bearing (15) has segments (50) on its radial inside to form the engaging face for the hub disc (10).

## Revendications

1. Dispositif de volant d'inertie divisé présentant une première masse d'inertie (3) attaquant de préférence le vilebrequin (1) d'un moteur à combustion interne et une seconde masse d'inertie (12) reliée à celle-ci via un amortisseur d'oscillation de torsion (30) et capable de décrire une rotation relative limitée par rapport à la première masse d'inertie (3), l'une des masses d'inertie (3) étant pourvue d'un palier axial (17) et d'un palier radial (15) pour recevoir un disque de moyeu (10) de l'amortisseur d'oscillation de torsion (30), le palier radial (15) présentant sur sa partie (16) servant à guider radialement le disque de moyeu (10), des deux côtés du disque de moyeu (10), un bras respectif (37, 41, 46) s'étendant radialement en tant que palier axial (17), caractérisé en ce que les bras (37, 41, 46) sont formés par des disques respectifs (19, 20) qui peuvent être centrés dans la masse d'inertie sur un tronçon s'étendant sensiblement axialement du creux (14) qui les supporte radialement.

2. Dispositif de volant d'inertie divisé selon la revendication 1, caractérisé en ce que chaque disque (19, 20) du palier axial (17) est relié à un bras (38) de la partie de palier (38, 42) du palier radial (15), ledit bras s'étendant sensiblement perpendiculairement audit disque, en formant une demi-coque respective (36).

3. Dispositif de volant d'inertie divisé selon la revendication 1, caractérisé en ce que la partie de palier (42) du palier radial (15) est interrompue par des évidements (45) qui s'étendent en direction axiale.

4. Dispositif de volant d'inertie divisé selon la revendication 1, caractérisé en ce que les disques (19, 20) sont interrompus respectivement par des évidements (47) dirigés radialement à l'axe de moyeu.

5. Dispositif de volant d'inertie divisé selon la revendication 1, caractérisé en ce que les disques (19, 20) du palier axial (17) sont pourvus, du moins sur un côté du disque de moyeu (10), de segments (51) pour former la surface d'appui pour le disque de moyeu (10).

6. Dispositif de volant d'inertie divisé selon la revendication 1, caractérisé en ce que le disque de moyeu (10) présente dans la région d'extension des disques (19, 20) du palier axial (17) des segments (53) pour former une surface d'appui.

7. Dispositif de volant d'inertie divisé selon la revendication 1, caractérisé en ce que les côtés du disque de moyeu (10) sont pourvus de segments (52) dans la région de la bordure respective radialement extérieure.

8. Dispositif de volant d'inertie divisé selon la revendication 1, caractérisé en ce que le palier radial (15) présente sur sa face intérieure radiale des segments (50) pour former la surface d'appui pour le disque de moyeu (10).
